## Europäisches Patentamt
## European Patent Office
## Office européen des brevets

(11) Veröffentlichungsnummer: **0 001 749**
**B1**

(12) **EUROPÄISCHE PATENTSCHRIFT**

(45) Veröffentlichungstag der Patentschrift: **05.08.81**

(51) Int. Cl.³: **B 65 G 47/50, B 65 G 51/46**

(21) Anmeldenummer: **78100995.6**

(22) Anmeldetag: **26.09.78**

(54) Zentralgesteuerte Förderanlage.

(30) Priorität: **27.10.77 DE 2748448**

(43) Veröffentlichungstag der Anmeldung:
**16.05.79 Patentblatt 79/10**

(45) Bekanntmachung des Hinweises auf die Patenterteilung:
**05.08.81 Patentblatt 81/31**

(84) Benannte Vertragsstaaten:
**CH DE FR GB**

(56) Entgegenhaltungen:
**DE - A - 2 442 659**
**DE - B - 2 028 836**
**US - A - 3 892 372**

**FÖRDERMITTEL-JOURNAL, Heft 9, 1974**
**HERMANN DOSS u.a. "Neue Wege bei Rohrpost-**
**Systemen, Computergesteuerte Büchsen"**
**Seiten 26 bis 30**

(73) Patentinhaber: **SIEMENS AKTIENGESELLSCHAFT**
**Berlin und München**
**Postfach 22 02 61**
**D-8000 München 22 (DE)**

(72) Erfinder: **Thoma, Ferdinand**
**Köthener Strasse 32**
**D-1000 Berlin 61 (DE)**

Courier Press, Leamington Spa, England.

## Zentralgesteuerte Förderanlage

Die Erfindung betrifft eine Zentralgesteuerte Förderanlage mit Sende-und Empfangsstationen, die an ihre Stell- und Signaleinrichtungen angepaßte stationsindividuelle Steuersätze aufweisen, die parallel an eine mit einer zentralen Programmsteuereinrichtung verbundene mehradrige Adressenleitung angeschlossen sind, wobei jede Station einen Adressendekoder und jede Sendestation jeweils ein Zeilwahleinrichtung aufweist und sendebereite Sendestationen durch zyklisches Anlegen stationsindividueller Adresseninformationen an die Adressenleitung seitens der Programmsteuereinrichtung, Ansprechen des Adressendekoders bei Koinzidenz mit der angelegten Adresseninformation und Abgabe eines Quittungssignals für die Programmsteuereinrichtung auf eine allen Stationen gemeinsam zugeordnete Quittungsleitung ermittelt werden.

Bei dieser — aus der DE-OS 24 42 659 bekannten — Förderanlage wird nach Abgabe des Quittungssignals and die Programmsteuereinrichtung die Adresse der markierten Sendestation auf der Adressenleitung beibehalten, wodurch die Sendestation zu weiteren Steuervorgängen aktiviert wird, die von dem Steuersatz dieser Station initiiert und durchgeführt werden, wobei das Ausmaß der logischen Verknüpfung der Steuerungsbestandteile der Steuersätze je nach Art der verwendeten Stationen und der Größe der Anlage verhältnismäßig umfangreich sein kann.

Von der durch die Beibehaltung der Adresseninformation auf der mehradrigen Adressenleitung belegten Sendestation wird die Zielinformation an die vorgesehene Empfangsstation übertragen. Die Zielinformation wird durch eine Zielwahleinrichtung erzeugt, die im allgemeinen in Form von Tasten, die in einem beliebigen Code beschaltet sind, realisiert ist. Die Abgabe der durch das Tastensystem vorbestimmten Zielinformation erfolgt über eine mehradrige Zielübertragungsleitung, an die sämtliche Stationen parallel' angeschlossen sind. Die über diese Leitung ansprechende Empfangsstation sendet über eine weitere Quittungsleitung, and die ebenfalls alle Steuersätze der Stationen parallel angeschlossen sina, eine Rückmeldung, die nur von der Station, die durch die Aufrechterhaltung der Adresseninformation auf der Adressenleitung aktiviert ist, empfangen werden kann. Anschließend leitet diese Station die Absendung des Förderbehälters an die angewählte Empfangsstation ein.

Eine derartige Steuerung kann nur in solchen Förderanlagen eingesetzt werden, in denen ein einziger Transportstrang an allen Stationen im Sinne einer Reihenanlage vorbeigeführt ist. Beispiele für solche Förderanlagen sind kleinere Rohrpostanlagen und Bandförderanlagen. Sofern eine Förderanlage Verzweigungen aufweist, d.h. Weichensysteme, die an bestimmten Orten mehrere Fahrtrichtungen zulassen, ist die bekannte Steuerung kaum mehr einsetzbar, da hier sämtliche Steuervorgänge lediglich von der Sende- und von der Empfangsstation ausgeführt werden. Eine Berücksichtigung solcher verschiedener Fahrtmöglichkeiten für Förderbehälter wäre nur durch erhebliche Ausweitung der steuerungstechnischen Logik innerhalb der Steuersätze der einzelnen Stationen möglich, wobei für unterschiedliche Anlagen jeweils unterschiedliche Steuerungskonzepte innerhalb der Steuersätze und unterschiedliche Leitungsführungen zur Verbindung von Umlenk-, Speicher- und Haltevorrichtungen vorgesehen sein müßten. Der Leitungsaufwand ist jedoch bereits bei Einsatz der bekannten Steuerung in einer Durchlauffreihenanlage als sehr hoch anzusehen.

Die der Erfindung zugrunde liegende Aufgabe besteht darin, mit einem möglichst geringen Leitungsaufwand eine Steuerung zu schaffen, die für Förderanlagen sowohl mit beliebigem Aufbau von Transportsträngen zwischen den Stationen jeweils einen zumindest im Prinzip gleichen Aufbau der Steuersätze der Stationen ermöglicht und insbesondere eine von solchen Änderungen der Stationen oder der Anlagenstrukturen weitestgehend unabhängigen Leitungsverlauf und Anschluß der Steuersätze an die Leitungen vorsieht. Diese Aufgabe wird im Zusammenhang mit der eingangs definierten Förderanlage dadurch gelöst, daß alle Steuersätze mit je einem durch ein Ansprechsignal des zugeordneten Adressendekoders aufnahmebereit schaltbaren Operationsdekoder parallel an eine mit der Programmsteuereinrichtung verbundene mehradrige Steuerleitung angeschlossen sind, daß nach Abgabe einer eine Zielinformationsübertragung einleitenden Operationsinformation von der Programmsteuereinrichtung an die Steuerleitung der Operationsdekoder der ermittelten Sendestation anspricht und Signalspannung und die Zielwahleinrichtung, die parallel zum Adressendekoder an die Adressenleitung angeschlossen ist, anschaltet und damit die an der Zielwahleinrichtung (Z0...Z9) eingestellte Zielinformation an die Programmsteuereinrichtung übertragen wird und daß die Programmsteuereinrichtung die empfangene Zielinformation als Adresseninformation an die Adressenleitung (al1...al12) sowie für die derart angesteuerte Empfangsstation und die Sendestation an die Steuerleitung (sl1 ... sl4) Operationsinformationen abgibt, die einerseits der Umschaltung der Stell- und Signaleinrichtungen (A...L), andererseits der Abfrage des Schaltzustandes derselben mittels über die Quittungsleitung (ql) übertragener Quittungssignale dienen.

In der erfindungsgemäßen Förderanlage sind demgemäß alle Steuersätze gleichwertig parallel an die Adressenleitung und an die Steuerleitung angeschlossen, wobei sämtliche Steuersätze sich im Prinzip permanent im Empfangszustand befinden und die Ansteuerung aller Steuersätze mit Hilfe der Addresseninformationen erfolgt. Als wesentlich ist ferner anzusehen, daß jeweils nur ein einziger Steuersatz zu einer bestimmten Zeit über die Adressenleitung oder die Steuerleitung aktiviert wird und daß die Aktivierung in jedem Fall durch die zentrale Programmsteuereinrichtung erfolgt, während eine Übertragung von Adresseninformationen, Zielinformationen, Operationsinformationen oder Quittungssignalen zwischen einzelnen Steuersätzen ausgeschlossen ist.

Die in der erfindungsgemäßen Förderanlage vorgesehene Steuerungsstruktur ist insbesondere dann als vorteilhaft anzusehen, wenn neben den Sende- und Empfangsstationen zusätzliche Antriebs-, Umlenk- oder Sperreinrichtungen vorgesehen sind. Unter solchen Antriebseinrichtungen sind z.B. Gebläse und Ventile einer Rohrpostanlage zu verstehen, die nicht unbedingt im Zuge der durch eine Sende- und eine Empfangsstation definierten Förderstrecke gelegen sein müssen. Ein Beispiel für eine Umlenkeinrichtung stellt eine Weiche dar, die in einer Bandförderanlage eine durchgehende Bandstrecke mit einer abzweigenden Bandstrecke verbindet. Als Sperreinrichtungen können beispielsweise Speicher angesehen werden, die am Ort der Zusammenführung einer Bandstrecke mit einem Umlaufauzug vorgesehen werden, in den jeweils nur ein Förderbehälter je Umlaufabschnitt eingeführt werden kann. Eine vorteilhafte Weiterbildung der Erfindung sieht in diesem Zusammenhang vor, daß solche Antriebs-, Umlenk-und Sperreinrichtungen ebenfalls mit an ihre Stell- und Signaleinrichtungen angepaßten Steuersätzen parallel an die Adressenleitung, die Quittungsleitung und die Steuerleitung angeschlossen sind.

Die Programmsteuereinrichtung bezieht diese Steuersätze in gleicher Weise in das Steuerprogramm ein wie die Steuersätze der Sende- und Empfangsstationen. Die Programmsteuereinrichtung ermittelt also mittels der entsprechenden Adresseninformationen die Steuersätze der einer durch eine Sendestation und eine Empfangsstation bestimmten Förderstrecke zugeordneten Antriebs-, Umlenk- und Sperreinrichtungen nacheinander und gibt Operationsinformationen für die zugehörigen Stelleinrichtungen ab. Die Anpassung der in der erfindungsgemäßen Förderanlage vorgesehen Steuerungsstruktur an unterschiedliche Förderanlagen erfolgt also durch Einbeziehung aller Steuersätze sämtlicher mit Stell- und/oder Signaleinrichtungen versehenen Orte der Förderanlage in den aus der Adressenleitung, der Steuerleitung und der Quittungsleitung gebildeten Datenkanal und nimmt die eigentliche Individualisierung der Steuerung durch Anpassung innerhalb der zentralen Programmsteuereinrichtung — durch Änderung der die Anlagenkonfiguration beschreibenden Daten — vor.

Eine vorteilhafte Weiterbildung der Erfindung sieht in bezug auf die Ausgestaltung der Steuersätze vor, daß an Ausgangsanschlüsse der steuersatzindividuellen Operationsdekoder jeweils Operationssignalspeicher angeschlossen sind, deren Ausgänge mit jeweils einer der Stell-und Signaleinrichtungen verbunden sind. jeder Ausgang eines Operationsdekoders ist also einer bestimmten mechanischen Komponente der zugehörigen Stell- und/oder Signaleinrichtung zugeordnet, wobei zur Anpassung der für unterschiedliche Förderanlagen bzw. Stelleinrichtungen unterschiedlichen Schaltelemente der Stell- und/oder Signaleinrichtungen diesen Signalanpassungsschaltungen zugeordnet sind. Die Signalanpassungsschaltungen können einerseits lediglich eine Anpassung an den für die Schaltelemente vorgesehenen Spannungs- oder Leistungspegel beinhalten, sind aber auch bei einigen in Förderanlagen eingesetzten Stell-oder Signaleinrichtungen als Eingangsschaltstufen separater Steuereinrichtungen anzusehen. Ein Beispiel für eine solche Steuereinrichtung ist beispielsweise in der Anlaß- und Abschaltsteuerung eines Elektromotors zu sehen, der ein schwenkbares Weichenelement einer Bandförderstrecke antreibt.

Die zur einwandfreien Durchführung nachfolgender Fördervorgänge notwendige Normierung gesetzter Operationssignalspeicher erfolgt vorteilhafterweise derart, daß der Operationsdekoder einen Rückstellausgang für die Operationssignalspeicher aufweist. Zu bestimmten Zeiten — zweckmäßigerweise dann, wenn der entsprechende Steuersatz nicht mehr aktiv an einem laufenden Fördervorgang beteiligt ist, wird von der zentralen Programmsteuereinrichtung eine Operationsinformation abgegeben, die im Operationsdekoder zur Ansteuerung des Rückstellausganges und damit zur Rückstellung der Operationssignalspeicher führt, womit eine Rückschaltung der entsprechenden mechanischen Komponenten der entsprechenden Station bzw. der Stell- oder Signaleinrichtung in ihre Ausgangslage erfolgt.

Gemäß einer weiteren Ausgestaltung der Erfindung wird der Schaltzustand der Stell- und Signaleinrichtungen von der Programmsteuereinrichtung überwacht und die Abgabe weiterer Operationsinformationen vom Vorliegen der dafür vorgesehenen Schaltzustände der abgefragten Stell- oder Signaleinrichtungen abhängig gemacht. Zu diesem Zweck weist der Operationsdekoder Ausgangsanschlüsse auf, die bei Vorliegen entsprechender Abfrageinformationen auf der Steuerleitung jeweils ein Schaltsignal für UND-Gatter führen, die mit ihrem jeweils anderen Eingang an einen Ausgang eines einer der Stell- und Signaleinrichtungen zugeordneten Zustandssignalspeichers angeschlossen sind und mit ihren Ausgängen die Eingänge eines an die Quittungsleitung angeschlossenen ODER-Gatters bilden.

Die notwendige Rückstellung der Zustandssignalspeicher kann dabei ebenfalls durch entsprechende Ausgänge des Operationsdekoders erfolgen; eine vorteilhafte Weiterbildung der Erfindung sieht jedoch vor, daß die Zustandssignalspeicher einen bei der Durchschaltung des jeweils nachgeordneten UND-Gatters aktivierten Rückstelleingang aufweisen. Bei der Abfrage des Zustandssignalspeichers wird dabei aus dem Ausgangssignal des nachgeordneten UND-Gatters ein Impuls gewonnen, der den Zustandssignalspeicher umschaltet. Die Information des Zustandssignalspeichers geht also mit der Abfrage über einen entsprechenden Ausgang des Operationsdekoders verloren. Der wesentliche Vorteil dieser Maßnahme ist in der Einsparung von Operationsdekoderausgängen und damit auch in der Einsparung von Adern der Steuerleitung zu sehen.

Eine weitere Ausgestaltung der Erfindung sieht vor, daß die Operationsdekoder aller Steuersätze an eine gemeinsame Taktleitung angeschlossen sind, die in einem von der Programmsteuereinrichtung bestimmten Operations- und Abfragetakt die Operationsdekoder bei Vorliegen einer entsprechenden Adresseninformation auf der Adressenleitung empfangsbereit schaltende Impulse führt. Die Impulse werden gegenüber den Operationsinformationen verzögert, um das Ansprechen der Operationsdekoder erst im eingeschwungenen Zustand der Operationsinformationen einzuleiten.

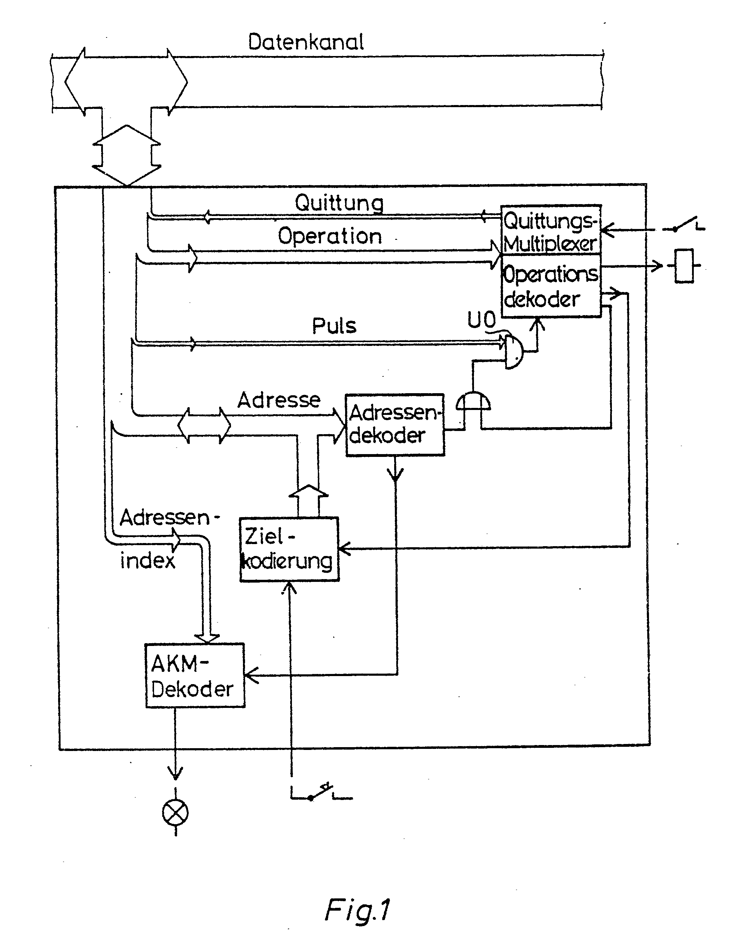

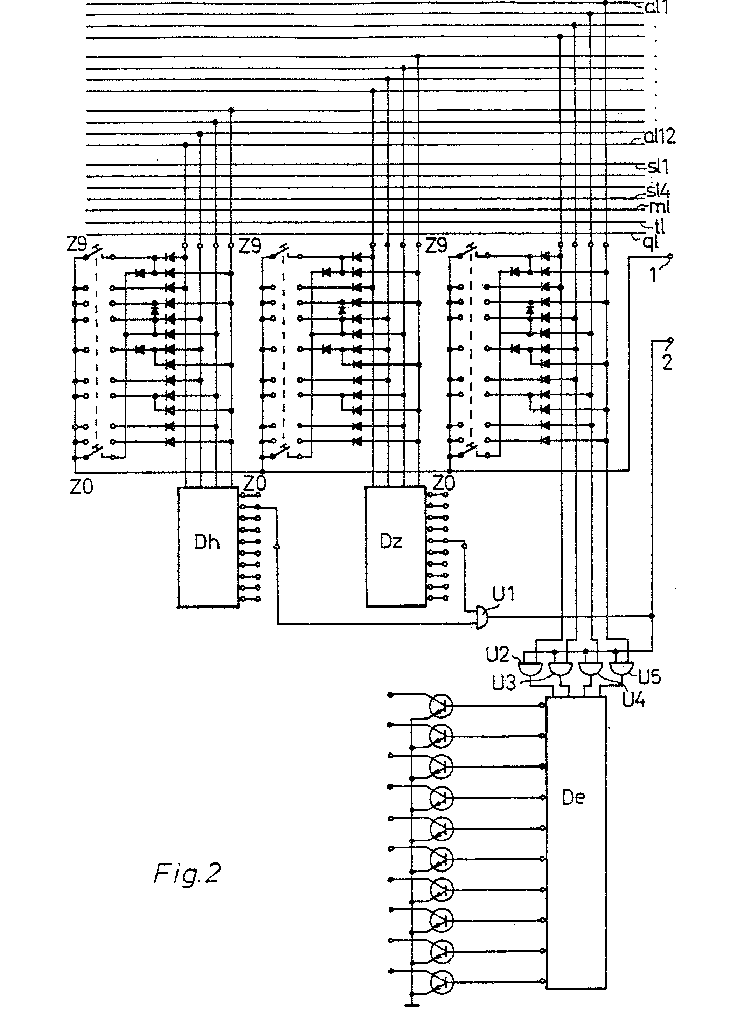

Die Erfindung wird im folgenden anhand eines in 4 Figuren dargestellten Ausführungsbeispiels erläutert. Dabei veranschaulicht die Figur 1 den Informationsfluß zwischen einem Steuersatz einer kombinierten Sende- und Empfangsstation und der zentralen Programmsteuereinrichtung sowie den Informationsfluß innerhalb des Steuersatzes. Die Figuren 2 bis 4 stellen zusammengenommen den Steuersatz einer kombinierte Sende- und Empfangsstation und die Anschaltung des Steuersatzes an die zur nicht dargestellten zentralen Programmsteuereinrichtung führenden Leitungen dar.

Das in der Figur 1 dargestellte Signalflußschema des Steuersatzes einer kombinierten Sende- und Empfangsstation veranschaulicht die Verknüpfung der wesentlichen Bestandteile eine derartigen Steuersatzes untereinander und in bezug auf de Datenkanal, der die Verbindung sämtlicher Steuersätze zur zentralen Programmsteuereinrichtung darstellt.

Der Datenkanal enthält Addressenkanäle, die einen Adressendekoder des Steuersatzes beeinflussen; eine Anschaltung des Steuersatzes an den Datenkanal findet nur dann statt, wenn Koinzidenz zwischen der Einstellung des Adressendekoders und der Adresseninformation auf dem Datenkanal vorliegt. Im Falle der Koinzidenz gibt der Adressendekoder über ein UND-Gatter UO, das von einem im Abfragetakt anliegenden Impuls gesteuert ist, ein Schaltsignal für einen Operationsdekoder ab. Ein Quittungsmultiplexer gibt dann eine Quittung ab, wenn der Steuersatz zur Aufnahme von Operationsinformationen bereit ist. Der Quittungsmultiplexer wird von Quittungsgebern gesteuert, die teilweise als Speicher für Zustandssignale elektromechanischer Komponenten der Station aufgebaut sind.

Die Ansteuerung des Quittungsmultiplexers erfolgt über Ausgänge des Operationsdekoders, der seinerseits unter dem Steuereinfluß der Operationsinformationen steht.

Bei Arbeitsweise der Station als Sendestation wird über den Operationsdekoder eine Zielwahleinrichtung angeschaltet, die Zielinformationen und den Datenkanal abgibt. Die Zielwahleinrichtung wird dabei durch Zieltasten an der Station gebildet.

Über einen Index teil der Adresseninformation und einen Ausgang des Adressendekoders ist der Dekoder für eine Ankunftsmeldung (AKM-Dekoder) ansteuerbar. Unter einer Ankunftsmeldung wird ein Signal verstanden, das einen bestimmten von mehreren derselben Station zugeordneten Teilnehmern anzeigt. Diese Anzeige erfolgt im allgemeinen optisch.

Die Durchführung von Steuerungsvorgängen erfolgt stets so, daß unter Aufrechterhaltung der Koinzidenz des Adressendekoders mit der Adresseninformation auf dem Datenkanal von der den Ausgangspunkt des Datenkanals bildenden Programmsteuereinrichtung — im Ausführungsbeispiel durch einen Mikrocomputer realisiert — programmentsprechend die erste Operationsinformation abgegeben, die entsprechende Quittung empfangen und daraufhin die nächste Operationsinformation abgegeben wird. Die Steuerung vollzeht sich also in einem ständigen Wechsel von Operationsinformationen und rücklaufenden Quittungssignalen.

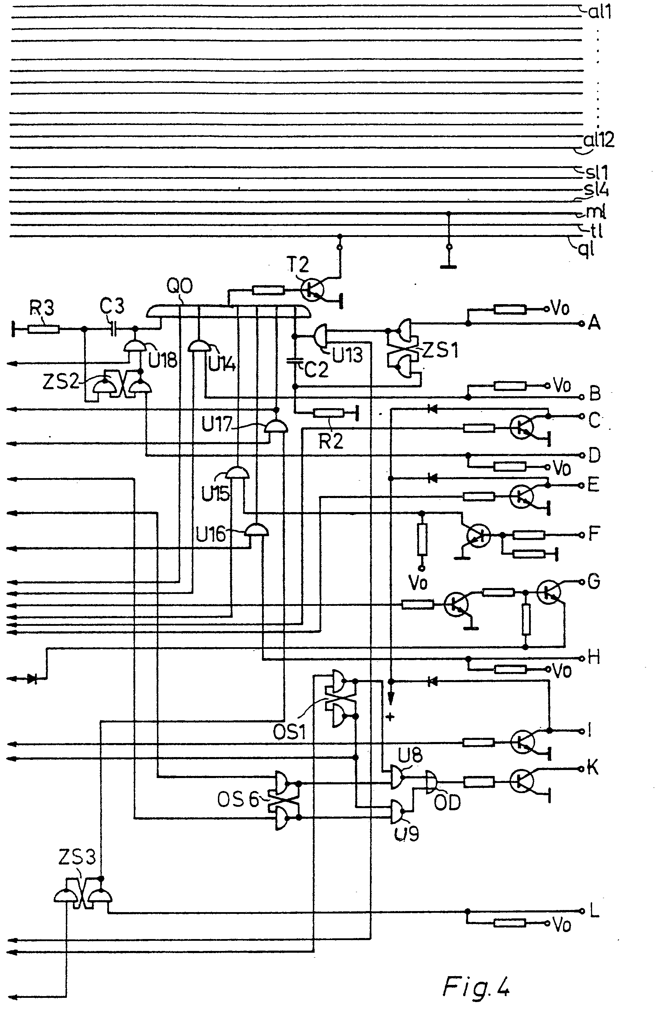

Der in den Figuren 2 bis 4 dargestellte Steuersatz bezieht sich auf eine Sende- und Empfangsstation einer Rohrpostanlage, bei der die Stationen am Ende von jeweils aus einem Hauptrohrstrang abzweigenden Stationssträngen angeordnet sind. Dabei sind an die in Figur 4 dargestellten Signalanpassungsschaltungen bzw. die Ausgänge A bis L folgende elektrische bzw. elektromechanische Komponenten angeschlossen:

A: Fahrkontakt im Bereich der Weiche. Der Fahrkontakt wird bei Vorbeifahrt der umzulenkenden Rohrpostbüchse betätigt.

B: Weichendendkontakt. Der Kontakt wird betätigt, wenn die Weiche umgeschaltet ist.

C: Weichensteuerung. Bei Schaltsignal am Ausgang C wird die Weichensteuerung — Magnet oder Motor — angelassen.

D: Fahrkontakt am Ventil. Ventil und Fahrkontakt sind in unmittelbarer Nachbarschaft der am Ende eines Rohrstranges gelegenen Station angeordnet.

E: Ventil. Bei Schaltpotential am Ausgang E wird das Ventil geöffnet.

F: Quittungskontakt vom Trennschieber. Die Station weist einen in den lichten Querschnitt des ankommenden Verzweigungsstranges einfahrbaren oder aus diesem ausfahrbaren Schieber auf. Wenn der Schieber in der Endstellung angelangt ist, wird der Quittungskontakt betätigt.

G: Schiebersteuerung. Bei Schaltpotential am Ausgang wird das Antriebsorgan des Schiebers beeinflußt.

H: Endkontakt eines Sendespeichers. Für die vorliegende kombinierte Sende- und Empfangsstation wird ein Sendespeicher vorausgesetzt, der wahlweise in die Flucht des an der Station ankommenden Rohrstranges einfahrbar oder aus dieser ausfahrbar ist. In der eingefahrenen Stellung wird der Endkontakt betätigt.

I. Sendespeichersteuerung. Bei anliegen von Schaltpotential am Ausgang I wird der Sendespeicher in die Flucht des Fahrrohrstranges eingeschwenkt.

K: Anzeigelampe. Die lampe wird dann eingeschaltet, wenn eine Rohrpostbüchse für die Station unterwegs ist und insofern keine Sendungen momentan aufgegeben werden können.

L: Sendetaste. Durch Betätigen der an den Ausgang L angeschlossenen Sendetaste wird ein Absendewunsch der Station für die zentrale Programmsteuereinrichtung abfragbar gespeichert.

Wie den Figuren 2 bis 4 zu entnehmen ist, enhält der die einzelnen Steuersätze mit der zentral Programmsteuereinrichtung verbindende Datenkanal eine aus 12 Adern al1 bis al12 bestehende Adressenleitung, eine aus vier Adern sl1 bis sl4 gebildete Steuerleitung sowie je eine Taktleitung tl, eine Quittungsleitung ql und eine Bezugspotentialleitung ml. Der für die Adressenübertragung gewählte Code ist ein binär codierter Dezimalcode, so daß sich mit jeweils vier Adern der Adressenleitung al1 bis al12 eine Ziffer einer dreiziffrigen Gesamtinformation darstellen läßt. Demzufolge weist der Steuersatz drei Adressendekodereinheiten Dh, Dz und De auf, die eingangsseitig jeweils an vier Adern der Adressenleitung al1 bis al12 angeschlossen sind. Dabei dient der Adressendekoder De der Dekodierung der Einerstelle der Adresseninformation und der Abgabe eines Signals für eine Ankunftsmeldung. Die eigentlich Adresse der Station wird also durch die Hunderterstelle und Zehnerstelle der Adresseninformation gebildet und durch die Adressendekoder Dh und Dz verarbeitet, während die zusätzliche Adresseninformation lediglich der Unterscheidung verschiedener, derselben Station zugeordneter Bedienungspersonen dient.

An den Verbindungsleitungen der Adressendekoder Dh, Dz und De ist mit jeweils 16 Dioden eine Codierung vorgenommen, die im Zusammenwirken mit den für jede Dekade vorgesehenen 10 Zieltasten Z0 bis Z9 die Abgabe dekadisch aufgebauter Zielinformationen im gleichen Code wie dem der ankommenden Addresseninformation ermöglicht.

Die Signalspannung zur Abgabe der Zielinformation an die Adressenleitung al1 bis al12 liegt dabei nicht ständig an den Zieltasten Z0 bis Z9 an, sondern wird in bestimmten Zeiten angelegt (siehe im Abschnitt "Operationen" das signal am Ausgang S14).

Bei Vorliegen von Koinzidenz der Adressendekoder Dh, Dz mit der Adresseninformation wird das UND-Gatter U1 durchgeschaltet und damit ein Vorbereitungssignal (über die Leitung 2) an den Operationsdekoder OpD abgegeben. Zugleich werden die Eingänge des Adressendekoders De über die UND-Gatter U2 bis U5 und damit die spätere Abgabe definierter Signale zur Unterscheidung mehrerer der Station zugeordneten Teilnehmer voneinander vorbereitet.

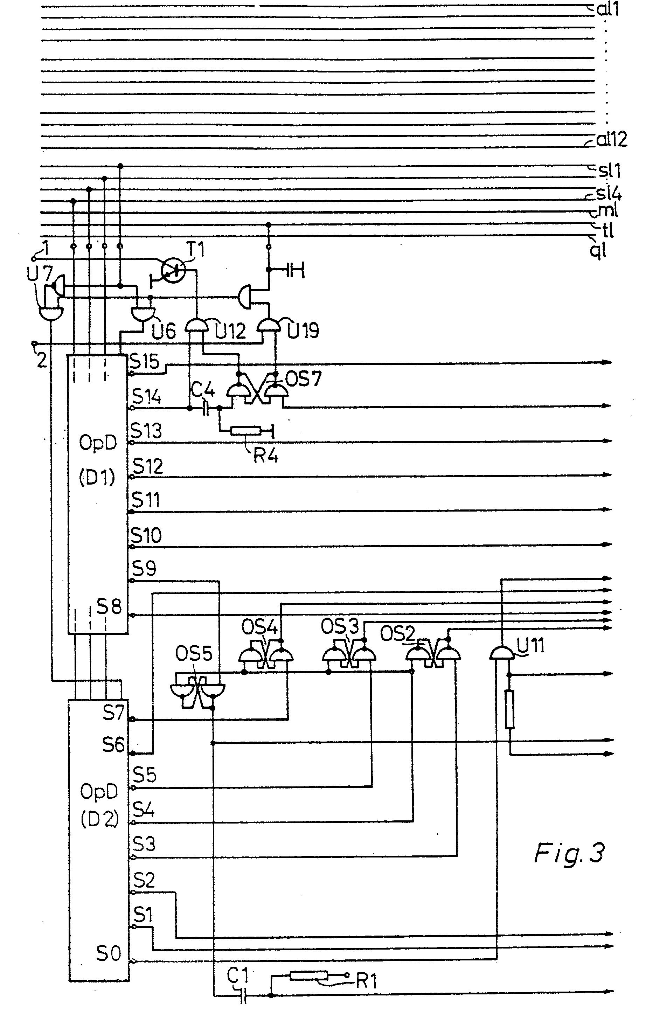

Der Operationsdekoder OpD (Figur 3) ist aus zwei Dekoderstufen D1, D2, gebildet und ist mit den vier Adern sl1 bis sl4 der Steuerleitung verbunden und weist den auf den vier Adern sl1 bis sl4 im binären Code darstellbaren 16 verschiedenen Informationen entsprechend 16 Signalausgänge S0 bis S15 auf. Mittels der UND-Gatter U6 und U7 wird erreicht, daß bei Fehlen des zugehörigen Ausgangssignals des Adressendekoders Dh, Dz die Dekodierung der Operationsinformation unterdrückt wird. An die Signalausgänge S0 bis S15 sind insgesamt 7 Operationssignalspeicher OS1 bis OS7 und drei Zustandssignalspeicher ZS1, ZS2, ZS3 angeschlossen, die im eingangsseitig mit den an die Ausgänge A bis L (Figure 4) angeschlossenen mechanschen oder elektromechanischen Komponenten der Station verbunden sind. Die Zustandssignalspeicher ZS1, ZS2, ZS3 sind ausgangsseitig an das Mehrfach-ODER-Gatter QO (siehe Quittungsmultiplexer Figur 1) angeschlossen, das ausgangsseitig über den Schalttransistor T2 mit der Quittungsleitung ql verbunden ist.

Im folgenden sollen anhand einer schematischen Aufzählung der möglichen Steuer- und Quittungsoperationen die Ansteuerung der Operationssignalspeicher OS1 bis OS7 und der Zustandssignalspeicher ZS1 bis ZS3 sowie die zugehörigen Steuervorgänge zur Einleitung der Quittungsabgabe über das ODER-Gatter QO und zur Rückstellung der Operationssignalspeicher OS1 bis OS7 und Zustandssignalspeicher ZS1, ZS2, ZS3 erläutert werden, Die Erläuterung erfolgt dabei jeweils unter der

Annahme einer bestimmten Operationsinformation auf der Steuerleitung sl1 bis sl4, die jeweils zur Aktivierung eines bestimmten Aus-ganges der Ausgänge S0 bis S15 des Operationsdekoders OpD führt.

*Operationen*
Signal am Ausgang S1:
Durch dieses Signal wird der Operationssignalspeicher OS1 gesetzt und damit über den Ausgang K (Figur 4) eine nicht dargestellte Stationslampe eingeschaltet. Neben dieser optischen Anzeige wird als wichtigste Konsequenz der Steuersatz für jede weitere Aktivität in der Anlage — beispielsweise nach Erkennen einer Störung an der Station — gesperrt. Die Sperrung erfolgt dabei durch den Anschluß des Speicherausgangs des Operationssignalspeichers OS1 an den Vor-bereitungseingang des UND-Gatters U11 (vergleiche im Abschnitt "Quittungen" das Schaltsignal am Ausgang S0). Der Blockierungs-zustand des Steuersatzes ist nur durch gesonderte, nicht dargestellte Maßnahmen einer Bedienungsperson aufhebbar.

Signal am Ausgang S3:
Das Ausgangssignal setzt den Operationssignalspeicher OS2, der mit dem Ausgang E (Figur 4) verbunden ist; damit wird das Stationsventil geöffnet.

Signal am Ausgang S4:
Der Signalausgang S4 führt bei Aktivierung Rückstellsignal für die Operationssignalspeicher OS2, OS3, OS4 und OS5.

Signal am Ausgang S5:
Mit diesem Operationssignal wird der Operationssignalspeicher OS3 gesetzt und damit Schaltpotential auf den Ausgang C (Figur 4) gegeben, an den die Weichensteuerung angeschlossen ist. Die Welche schaltet daraufhin in die Abzweigstellung.

Signal am Ausgang S7:
Das Schaltsignal setzt den Operationssignalspeicher OS4, der damit Schaltpotential an den Ausgang G (Figur 4) anlegt und die Öffnung des Trennschiebers der Station einleitet.

Signal am Ausgang S9:
Der Operationssignalspeicher OS5 wird gesetzt und damit Schaltpotential an den Ausgang I (Figur 4) übertragen, wodurch der Antrieb des Sendespeichers diesen in Flucht zu dem an der Station ankommenden Fahrrohrstranges einschwenkt.
Beim Normieren des Operationssignalspeichers OS5 durch Schaltsignal am Ausgang S4 wird aus der Änderung des Ausgangssignals des Operationssignalspeichers OS5 über das Differenzierglied R1/C1 ein Rückstellsignal für den Zustandssignalspeicher ZS3 abgeleitet (vergleiche im Abschnitt Quittungen" das Schaltsignal am Ausgang S13).

Signal am Ausgang S11:
Durch dieses Schaltsignal wird der Operationssignalspeicher OS6 gesetzt und damit über den Ausgang K (Figur 4) eine Stationslampe eingeschaltet, die die momentane Einbeziehung der Station in einem laufenden Fördervorgang anzeigt. Falls der Operationssignalspeicher OS1 dagegen gesetzt ist (vergleiche Schaltsignal am Ausgang S1), erlischt die bis dahin leuchtende Lampe.

Signal am Ausgang S12:
Durch dieses Schaltsignal wird der Operationssignalspeicher OS6 rückgestellt und damit die am Ausgang K (Figur 4) angeschaltete Lampe ausgeschaltet. Falls zu diesem Zeitpunkt der Operationssignalspeicher OS1 gesetzt ist, leuchtet die bis dahin ausgeschaltete Lampe auf.
Um eine Betriebsstörung innerhalb einer Einzelanlage (Blinksignal durch alternierend gesetzte Operationssignalspeicher OS6 und OS1) auch bei blockierten Stationen darstellen zu können, wird die an den Ausgang K angeschaltete Stationslampe durch eine XOR-Verknüpfung angesteuert (Exklusives ODER: U8, U9, OD).

Signal am Ausgang S14:
Dieses Schaltsignal dient der Übergabe einer mit den Zieltasten Z0 bis Z9 eingestellten Zielin-formation an die Adressenleitung al1 bis al12. Das Schaltsignal steuert das UND-Gatter U12 durch, sofern der den anderen Eingang des UND-Gatters U12 bildende Ausgang des Operationssignalspeichers OS7 Schaltpotential führt; dies ist der Fall, wenn zuvor ein Sendewunsch an der Station erkannt worden ist (siehe Abfrage des Zustandssignalspeichers ZS3 durch Schaltsignal am Ausgang S13 unter — "Quittungen" —. Die Rückstelung des Operationssignalspeichers OS7 erfolgt durch Differenzierung des Schaltsignals am Ausgang S14 über R4/C4. Die UND-Verknüpfung des Ausgangssignals des Operationssignalspeichers OS7 und des Schaltsignals am Ausgang S14 ersetzt dabei das Ansprechen des Operationsdekoders OpD über den Adressendekoder (Leitung '2') und die UND-Gatter U10 und U19. Damit stehen alle 12 Adern al1 bis al12 der Adressenleitung für die Übergabe der Zielinformationen zur Verfügung, wobei durch den Transistor T1, der über das UND-Gatter U12 angesteuert wird, Schaltpotential an die gemeinsame Eingangsleitung (1) der Zieltasten Z0 bis Z9 angelegt wird.

*Quittungen*
Die Abgabe von entsprechenden Operationssignalen dient dazu, den Schaltzustand mechanischer oder elektromechanischer Komponenten der Station entweder direkt oder mittels der Abfrage des Ausgangssignals der Zustandssignalspeicher ZS1, ZS2, ZS3 an die zentrale Programmsteuereinrichtung zu übermitteln. Die Übergabe der Quittungssignale erfolgt durch entsprechende Aktivierung des Operationsdekoders OpD und Auswertung des jeweiligen Schaltzustandes über das Mehrfach-ODER-Gatter QO.

Schaltsignal am Ausgang SO:

Mit diesem Schaltsignal wird die elektrische Verfügbarkeit des Steuersatzes abgefragt. Sofern der Steuersatz zuvor durch Signal am Ausgang S1 (Setzen des Operationssignalspeichers OS1) gesperrt wurde, erfolgt keine Abgabe eines Quittungssignals.

Schaltsignal am Ausgang S2:

Dieses Schaltsignal dient der Abfrage, ob der Zustandssignalspeicher ZS1 durch das Ansprechen des an den Ausgang A (Figur 4) angeschalteten Fahrkontaktes gesetzt worden ist. Die Rückstellung des Zustandssignalspeichers ZS1 erfolgt im Moment der über das UND-Gatter U13 gesteuerten Abfrage durch das Differenzierglied R2/C2.

Schaltsignal am Ausgang S6:

Sofern ein mit der schwenkbaren Weichenzunge einer Stationsweiche gekoppelter Quittungskontakt dadurch betätigt ist, daß die schwenkbare Weichenzunge ihre Endstellung erreicht hat, führt die Abfrage über das UND-Gatter U14 zur Abgabe eines Quittungssignals an die Quittungsleitung ql.

Schaltsignal am Ausgang S8:

Mit diesem Schaltsignal wird über das UND-Gatter U15 abgefragt, ob der Schieber der Station die jeweils geforderte Endstellung erreicht hat.

Schaltsignal am Ausgang S10:

Mit diesem Schaltsignal wird über das UND-Gatter U16 abgefragt, ob der Sendespeicher der Station zur Büchsenaufgabe in die Flucht des Fahrrohres eingeschwenkt ist und damit den an dem Ausgang H (Figur 4) angeschalteten Endkontakt betätigt hat.

Schaltsignal am Ausgang S13:

Ein Sendewunsch der kombinierten Sende- und Empfangsstation wird durch Betätigen der an den Ausgang L (Figur 4) angeschalteten Sendetaste geäußert, die den Zustandssignalspeicher ZS3 setzt. Die Abfrage des Sendewunsches erfolgt über das UND-Gatter U17, mit dessen Durchschaltung zugleich der Operationssignalspeicher OS7 zur Vorbereitung der Zielinformationsübertragung (siehe Schaltsignal an S14 unter 'Operationen') gesetzt wird.

Schaltsignal am Ausgang S15:

Mit diesem Schaltsignal wird abgefragt, ob der Zustandssignalspeicher ZS2 durch Betätigung des an den Ausgang D (Figur 4) angeschlossenen Fahrkontaktes gesetzt worden ist. Die Rückstellung des Zustandssignalspeichers ZS2 erfolgt im Moment der Abfrage durch das Differenzierglied R3/C3 am Ausgang des UND-Gatters U18.

**Patentansprüche**

1. Zentralgesteuerte Förderanlage mit Sende- und Empfangsstationen, die an ihre Stell- und Signaleinrichtungen (AL) angepaßte stationsindividuelle Steuersätze aufweisen, die parallel an eine mit einer zentralen Programmsteuereinrichtung verbundene mehradrige Adressenleitung (al1...al12) angeschlossen sind, wobei jede Station einen Adressendekoder (Dh, Dz) und jede Sendestation jeweils eine Zielwahleinrichtung (Z0...Z9) aufweist und sendebereite Sendestationen durch zyklisches Anlegen stationsindividueller Adresseninformationen an die Adressenleitung (al1...al12) seitens der Programmsteuereinrichtung, Ansprechen des Adressendekoders (Dh, Dz) bei Koinzidenz mit der angelegten Adresseninformation und Abgabe eines Quittungssignals für die Programmsteuereinrichtung auf eine allen Stationen gemeinsam zugeordnete Quittungsleitung (ql) ermittelt werden, dadurch gekennzeichnet, daß alle Steuersätze mit je einem durch ein Ansprechsignal des zugeordneten Adressendekoders (Dh, Dz) aufnahmebereit schaltbaren Operationsdekoder (OpD) parallel an eine mit der Programmsteuereinrichtung verbundene mehradrige Steuerleitung (sl1...sl14) angeschlossen sind, daß nach Abgabe einer eine Zielinformationsübertragung einleitenden Operationsinformation von der Programmsteuereinrichtung an die Steuerleitung (sl1...sl14) der Operationsdekoder (OpD) der ermittelten Sendestation anspricht und Signalspannung an die Zielwahleinrichtung (Z0...Z9), die parallel zum Adressendekoder (Dh, Dz) an die Adressenleitung (al1 ... al12) angeschlossen ist, anschaltet und damit die an der Zielwahleinrichtung (Z0...Z9) eingestellte Zielinformation an die Programmsteuereinrichtung übertragen wird und daß die Programmsteuereinrichtung die empfangene Zielinformation als Adresseninformation an die Adressenleitung (al1...al12) sowie für die derart angesteuerte Empfangsstation und die Sendestation an die Steuerleitung (sl1 ... sl4) Operationsinformationen abgibt, die einerseits der Umschaltung der Stell- und Signaleinrichtungen (A...L), andererseits der Abfrage des Schaltzustandes derselben mittels über die Quittungsleitung (ql) übertragener Quittungssignale dienen.

2. Förderanlage nach Anspruch 1, dadurch gekennzeichnet, daß neben den Sende- und Empfangsstationen vorhandene Antriebs-, Umlenk- und Sperreinrichtungen ebenfalls mit an ihre Stell- und Signaleinrichtungen angepaßten Steuersätzen parallel an die Adressenleitung (al1...al12), die Quittungsleitung (ql) und die Steuerleitung (sl1 ... sl4) angeschlossen sind.

3. Förderanlagen nach Anspruch 2, dadurch gekennzeichnet, daß die Programmsteuereinrichtung die Steuersätze der einer durch eine Sendestation und eine Empfangsstation bestimmten Förderstrecke zugeordneten Antriebs-, Umlenk- und Sperreinrichtungen nacheinander mittels der entsprechenden Adresseninformation ermittelt und Operationsinformationen für die zugehörigen Stelleinrichtungen abgibt.

4. Förderanlage nach einem der Ansprüche 1 bis 3, dadurch gekennzeichnet, daß an Ausgangsanschlüsse (S1, S3, S5, S7, S9, S12, S14) der steuersatzindividuellen Operationsdekoder (OpD) jeweils Operationssignalspeicher (OS1...OS7) angeschlossen sind, deren Ausgänge mit jeweils einer der Stell- und Signaleinrichtungen verbunden sind.

5. Förderanlage nach Anspruch 4, dadurch gekennzeichnet, daß der Operationsdekoder (OpD) einen Rückstellausgang (S4) für mehrere Operationssignalspeicher (OS2, OS3, OS4, OS5) aufweist.

6. Förderanlage nach Anspruch 4 oder 5, dadurch gekennzeichnet, daß den Stell- und Signaleinrichtungen (Ausgänge A...L) Signalanpassungsschaltungen zugeordnet sind.

7. Förderanlage nach einem der Ansprüche 4 bis 6, dadurch gekennzeichnet, daß einzelnen Stelleinrichtungen Steuerschaltungen zugeordnet sind, die von den Ausgängen der zugeordneten Operationssignalspeicher einschaltbar sind.

8. Förderanlagen nach einem der Ansprüche 1 bis 7, dadurch gekennzeichnet, daß der Operationsdekoder (OpD) Ausgangsanschlüsse (S2, S13, S15) aufweist, die bei Vorliegen entsprechender Abfrageinformationen auf der Steuerleitung (sl1...sl4) Schaltsignale für UND-Gatter (U13, U17, U18) führen, die mit ihrem jeweils anderen Eingang an einen Ausgang eines einer der Stell- und Signaleinrichtungen zugeordneten Zustandssignalspeichers (ZS1, ZS3, ZS2) angeschlossen sind und mit ihren Ausgängen die Eingänge eines an die Quittungsleitungen (ql) angeschlossenen ODER-Gatters (QO) bilden.

9. Förderanlagen nach Anspruch 8, dadurch gekennzeichnet, daß die Zustandssignalspeicher (ZS1, ZS2, ZS3) einen bei Durchschaltung des jeweils nachgeordneten UND-Gatters (U13, U17, U18) aktivierten Rückstelleingang aufweisen.

10. Förderanlage nach einem der Ansprüche 1 bis 9, dadurch gekennzeichnet, daß die Operationsdekoder (OpD) aller Steuersätze an eine gemeinsame Taktleitung (tl) angeschlossen sind, die in einem von der Programmsteuereinrichtung bestimmten Operations- und Abfragetakt die Operationsdekoder (OpD) bei Vorliegen einer entsprechenden Adresseninformation auf der Adressenleitung (al1 bis al12) empfangsbereit schaltende Pulse führt.

## Revendications

1. Installation de transport à commande centrale comportant des postes d'émission et des postes de réception qui présentent des dispositifs de commandes individuels adaptés à leurs dispositifs de commande et de signalisation et reliés en parallèle à un conducteur d'addresses multifilaire (al1...al12) relié à un dispositif central de commande de programme, chaque poste comportant un décodeur d'adresse (Dh, Dz) et chaque poste d'émission comportant un dispositif de sélection de but (Z0...Z9), alors que les postes d'émission prêts à l'envoi sont identifiés par application cyclique d'informations d'addresses, propres aux postes, aux conducteurs d'addresses (al1...al12), de la part du dispositif central de commande de programme, par attaque du décodeur d'adresses (Dh, Dz) à la coïncidence avec l'information d'addresse appliquée er par émission d'un signal d'accusé de réception pour ledit dispositif central de commande de programme sur une ligne d'accusé de réception (ql) associée en commun à tous les postes, caractérisée par le fait que chacun des dispositifs de commande est relié, par l'intermédiaire d'un décodeur d'opérations (OpD) susceptible d'être commuté dans son état de réception par un signal d'attaque du décodeur d'addresse associé (Dh, Dz) en parallèle à un conducteur de commande multifilaire (sl1...sl14) relié au dispositif central de commande de programme, qu'après émission d'une information d'opération déclenchant une transmission d'information de destination par ledit dispositif central de commande de programme vers le conducteur de commande (sl1...sl14), le décodeur d'opération (OpD) du poste d'émission déterminé est déclenché et applique une tension de signal aux dispositifs de sélection de destination (Z0...Z9) qui sont reliés, parallèlement aux décodeurs d'addresses (Dh, Dz), aux conducteurs d'addresses, l'information de destination réglée au niveau du dispositif de sélection de destination (Z0...Z9) étant transmise au dispositif central de commande de programme, et que le dispositif central de commande de programme délivre à l'information de destination reçue, sous la forme d'une information d'adresse, au conducteur d'adresses (al1...al12) ainsi que des informations d'opération aux conducteurs de commandes (sl1...sl4) pour le poste de réception ainsi attaqué et pour le poste d'émission, et qui servent d'une part à commuter les dispositifs de commande et de signalisation (A...L) et d'autre part à l'interrogation de ces derniers à l'aide de signaux d'accusé de réception transmis par l'intermédiaire du conducteur d'accusé de réception (ql).

2. Installation de transport selon la revendication 1, caractérisée par le fait qu'en plus des postes d'émission et de réception, les dispositifs d'entraînement, de déviation et de blocage qui peuvent exister sont reliés, également par des dispositifs de commande adaptés à leurs dispositifs de commande et de signalisation, en parallèle aux conducteurs d'addresses (al1...al12), au conducteur d'accusé de réception (ql) et au conducteur de commande (sl1...sl4).

3. Installation de transport selon la revendication 2, caractérisée par le fait que le dispositif central de commande de programme identifie successivement, et à l'aide de l'information d'adresse correspondante, les dispositifs de commande des dispositifs d'entraînement, de déviation et de blocage associés à une voie de transport déterminée par un poste d'émission et par un poste de réception, et émet des informations d'opérations pour le dispositif de commande associé.

4. Installation de transport selon l'une des revendications 1 à 3, caractérisée par le fait qu'à chacune des bornes de sortie (S1, S3, S5, S7, S9, S12, S14) des décodeurs (OpD) individuels pour chaque dispositif de commande, est relié une mémoire de signaux d'opérations (OS1...OS7) dont les sorties sont respectivement reliées à des dispositifs de commande et de signalisation.

5. Installation de transport selon la revendication 4, caractérisée par le fait que le décodeur d'opération (OpD) comporte une sortie de remise à l'état initial (S4) pour plusieurs mémoires de signaux d'opération (OS2, OS3, OS4, OS5).

6. Installation de transport selon la revendication 4 ou 5, caractérisée par le fait qu'aux dispositifs de commande et de signalisation (sorties A...L) sont associés des circuits d'adaptation de signaux.

7. Installation de transport selon l'une des revendications 4 à 6, caractérisée par le fait qu'au divers dispositifs de commande sont associés des circuits de commande qui sont susceptibles d'être mis en circuit par les sorties des mémoires de signaux d'opération associés mémoires de signaux d'opération associés.

8. Installation de transport selon l'une des revendications 1 à 7, caractérisée par le fait que le décodeur d'opération (OpD) comporte des bornes de sortie (S2, S13, S15) qui, lors de la présence d'informations d'interrogations correspondantes sur le conducteur de commande (Sl4 . . . Sl4) est le siège de signaux de commutation pour des circuits ET (U13, U17, U18) dont les entrées respectives sont reliées à une sortie d'une mémoire de signaux d'état (ZS1, ZS3, ZS2) associée à l'un des dispositifs de commande et de signalisation, et dont les sorties constituent les entrées d'un circuit OU (OO) relié aux conducteurs d'accusé de réception (ql).

9. Installation de transport selon la revendication 8, caractérisée par le fait que les mémoires de signaux d'état (ZS1, ZS2, ZS3) comportent une entrée de remise à l'état initial activé lors de la mise à l'état passant du circuit ET (U13, U17, U18) monté en aval.

10. Installation de transport selon l'une des revendications 1 à 9, caractérisée par le fait que les décodeurs d'opération (OpD) de tous les dispositifs de commande sont reliés à un conducteur de cadence commun (tl) présentant des impulsions qui commutent, à une cadence d'opérations et d'interrogations déterminée par le dispositif central de commande de programme, les décodeurs d'opération (OpD) dans leur état de réception, lorsque le conducteur d'addresse (al1 à al12) présente une information d'adresse correspondante.

**Claims**

1. Centrally controlled conveying system comprising transmitting stations and receiving stations which are provided with station-individual control sets, which are matched to their regulating devices and signalling devices (AL) and which are parallel connected to a multi-wire address line (al1...al12) which is connected to a central programme control device, wherein each station has an address decoder (Dh, Dz) and each transmitting station has a destination selection device (Z0...Z9) and transmitting stations which are ready to transmit are detected by cyclically feeding station-individual items of address information to the address line (al1...al12) from the side of the programme control device, by the response of the address decoder (Dh, Dz) in the case of coincidence with the fed items of address information and by the transfer of an acknowledgement signal for the programme control device to an acknowledgement line (ql) which is commonly assigned to all stations, characterised in that all control sets are connected in parallel to a multi-wire control line (sl1...sl14) in each case by means of an operation decoder (OpD) which is switchable so as to be ready to receive by means of a response signal of the assigned address decoder (Dh, Dz), that following the transfer of an item of operation information, which initiates a destination information transmission, from the programme control device to the control line (sl1...sl14), the operation decoder (OpD) of the determined transmitting station responds and applies signal voltage to the destination selection device (Z0...Z9) which, parallel to the address decoder (Dh, Dz), is connected to the address line (al1...al12) and thus the item of destination information selected in the destination selection device (Z0...Z9) is transmitted to the programme control device, and that the programme control device emits the received item of destination information to the address line (al1...al12) as item of address information and emits items of operation information to the control line (sl1...sl4) for the receiving station controlled in this fashion and the transmitting station, which items of operation information serve for the changeover of the regulating devices and signalling devices (A...L) on the one hand and on the other hand for the interrogation of the switching position of the latter by means of acknowledgement signals transmitted via the acknowledgement line (ql).

2. Conveying system as claimed in claim 1, characterized in that driving devices, deflecting devices and blocking devices which are present in addition to the transmitting stations and receiving stations are likewise connected in parallel to the address line (al1...al12), the acknowledgement line (ql) and the control line (sl1 ... sl4) by means of control sets matched to their regulating devices and signalling devices.

3. Conveying systems as claimed in claim 2, characterised in that the programme control device successively ascertains the control sets of the driving devices, deflecting devices and blocking devices, which are assigned to a conveying path determined by means of a transmitting station and a receiving station, with the aid of the appropriate item of address information, and emits items of operation information for the assigned regulating devices.

4. Conveying system as claimed in one of the claims 1 to 3, characterised in that operation signal stores (OS1...OS7), whose outputs are each connected to one of the regulating devices and signalling devices, are each connected to output terminals (S1, S3, S5, S7, S9, S12, S14) of the control set individual operation decoders (OpD).

5. Conveying system as claimed in claim 4, characterised in that the operation decoder (OpD) possesses a resetting output (S4) for a plurality of operation signal stores (OS2, OS3, OS4, OS5).

6. Conveying system as claimed in claim 4 or 5, characterised in that the regulating devices and signalling devices (outputs A...L) are assigned signal matching circuits.

7. Conveying system as claimed in one of the claims 4 to 6, characterised in that individual regulating devices are assigned control circuits which can be switched on by the outputs of the assigned operation signal stores.

8. Conveying systems as claimed in one of the claims 1 to 7, characterised in that the operation decoder (OpD) is provided with output terminals (S2, S13, S15) which when items of interrogation information are present on the control line (sl1...sl4) convey switching signals for AND-gates (U14, U17, U18) which by means of their particular other input are connected to an output of a status signal store (ZS1, ZS3, ZS2) assigned to one of the regulating devices and signalling devices and by means of their outputs, constitute the inputs of an OR-gate (QO) connected to the acknowledgement lines (ql).

9. Conveying systems as claimed in claim 8, characterised in that the status signal stores (ZS1, ZS2, ZS3) have a resetting input activated when the particular following AND-gate (U13, U17, U18) is switched.

10. Conveying system as claimed in one of the claims 1 to 9, characterised in that the operation decoders (OpD) of all control sets are connected to a common clock pulse line (tl) which in an operation clock pulse and interrogation clock pulse, which is determined by the programme control device, conveys pulses which when an appropriate item of address information is present on the address line (al1...al12) switches the operation decoders (OpD) so as to be ready to receive.

# 0 001 749

Datenkanal

*Fig.1*

Fig.2

Fig. 3

Fig. 4

4